# DEMANDE DE BREVET EUROPEEN

(11) **EP 1 722 298 A1**
(43) Date de publication de la demande: **15.11.2006**
(21) Numéro de dépôt: 06300444.4
(22) Date de dépôt: 09.05.2006
(51) Int. Cl.: G06F 3/043, H01H 19/60

(54) **Dispositif de contrôle et/ou de commande d'éléments d'équipements d'un véhicule automobile**

(30) Priorité: 09.05.2005 FR 0504639
(71) Demandeur: Peugeot Citroen Automobiles SA, 78943 Vélizy-Villacoublay Cedex (FR)
(72) Inventeur: Dessailly, Fabrice, 92370, Chaville (FR); Jarry, Philippe, 78120, Sonchamp (FR); Lebreton, Etienne, 92170, Vanves (FR)

(57) **Abrégé**

L'invention concerne un dispositif de contrôle et/ou de commande d'éléments d'équipements (2) d'un véhicule automobile.

Selon l'invention, le dispositif comprend une dalle tactile (4) pourvue d'une surface active (5) dotée d'au moins un capteur (6) relié à une unité électronique de traitement (7) de manière à localiser la provenance d'une onde acoustique (9) à laquelle est soumise la surface active (5) et à commander et/ou contrôler un élément d'équipement (2) du véhicule associé à la zone de la surface active (5) de laquelle provient l'onde acoustique (9) et en ce qu'il comprend au moins un bouton (10) de commande et/ou de contrôle pourvu d'un doigt d'indexation (11) manuellement mobile sur la surface active (5) de la dalle tactile (4) ondulée sur le chemin de déplacement du doigt d'indexation (11), de manière que le doigt (11) engendre une onde de choc acoustique (9) à chaque passage du doigt (11) d'une bosse (14) à un creux (15) de la surface ondulée de la dalle tactile (4).

L'invention trouve application dans le domaine de l'automobile.

## Description

L'invention concerne un dispositif de contrôle et/ou de commande d'éléments d'équipements d'un véhicule automobile.

Des dispositifs de ce type qui sont connus utilisent des boutons électriques ou électroniques, de type molette et sélecteur multi-positions, généralement regroupés par modules dans l'habitacle du véhicule. Ces boutons peuvent être actionnés sélectivement par un utilisateur pour commander et/ou contrôler un élément d'un équipement du véhicule tel que le volume d'un autoradio, l'éclairage de l'habitacle, son chauffage ou le toit ouvrant du véhicule.

Cependant, cette conception par modules de boutons électriques ou électroniques se traduit par des interfaces complexes entre l'utilisateur et les éléments d'équipements. En effet, chaque bouton est relié à un dispositif propre d'actionnement destiné à transmettre une information sur son bouton à un circuit électronique. Ainsi, il peut y avoir plusieurs dizaines de boutons dans l'habitacle du véhicule et autant de dispositifs correspondants, ce qui entraîne non seulement une complication des connexions entre les boutons et les dispositifs d'une part, entre les dispositifs et le circuit électronique d'autre part, mais aussi une augmentation du coût et du délai de fabrication d'une façade pourvue de tels modules.

Des recherches dans des domaines relativement éloignés de l'automobile ont été menées pour résoudre le problème de l'utilisation d'une pluralité de boutons électriques ou électroniques, en utilisant une ou plusieurs dalles tactiles.

Chaque dalle tactile est reliée à au moins un capteur et à un dispositif électronique permettant respectivement de capter et de localiser une onde acoustique produite par l'impact d'un élément extérieur, tel qu'un doigt de l'utilisateur, sur un emplacement de la surface de la dalle.

Chaque emplacement de la surface de la dalle pouvant être sélectivement sollicité par l'utilisateur peut donc remplacer un bouton et la boîte associée. La dalle tactile permet ainsi une simplification de l'interface utilisateur - éléments d'équipements.

Toutefois, l'un des inconvénients de cette technologie réside dans le fait qu'elle est limitée par des contacts d'appui qui certes parviennent à imiter les boutons de type bouton-poussoir mais qui sont inopérants pour copier des boutons de type multi-positions dont l'utilisateur sélectionne une position particulière parmi celles que propose le bouton.

Ces boutons sont pourtant les plus utilisés dans le domaine du contrôle et/ou de la commande d'éléments d'équipements d'un véhicule automobile car ils permettent à l'utilisateur de choisir un niveau de puissance et/ou d'ouverture parmi une gamme de niveaux admissibles par un élément d'équipement particulier.

Le but de l'invention est de remédier à ces inconvénients en proposant un dispositif de contrôle et/ou de commande d'éléments d'équipements d'un véhicule automobile, caractérisé en ce qu'il comprend une dalle tactile pourvue d'une surface active dotée d'au moins un capteur relié à une unité électronique de traitement de manière à localiser la provenance d'une onde acoustique à laquelle est soumise la surface active et à commander et/ou contrôler un élément d'équipement du véhicule associé à la zone de la surface active de laquelle provient l'onde acoustique et en ce qu' il comprend au moins un bouton de commande et/ou de contrôle pourvu d'un doigt d'indexation manuellement mobile sur la surface active de la dalle tactile ondulée sur le chemin de déplacement du doigt d'indexation, de manière que le doigt engendre une onde de choc acoustique à chaque passage du doigt d'une bosse à un creux de la surface ondulée de la dalle tactile.

Selon une autre caractéristique de l'invention, le bouton de contrôle et/ou de commande est monté en rotation relativement à la surface active de la dalle tactile suivant un axe de rotation perpendiculaire à la dalle tactile et le doigt d'indexation est solidaire du bouton, de façon excentrée par rapport à l'axe de rotation du bouton et comporte une extrémité flexible se déplaçant sur une piste ondulée de la surface active de la dalle tactile au moins en forme d'arc de cercle et de préférence circulaire,.

Plus particulièrement, le bouton de contrôle et/ou commande est en forme de molette dont la face plane inférieure circulaire est sensiblement parallèle à la surface active de la dalle tactile et le doigt d'indexation fait saillie de cette facedu disque vers la surface active de manière que son extrémité flexible soit en contact permanent avec la piste ondulée de la surface active de la dalle tactile.

Une autre possibilité est que le bouton de contrôle et/ou de commande soit déplaçable en translation relativement à la surface active de la dalle tactile et le doigt d'indexation solidaire coaxialement du bouton comporte une extrémité flexible se déplaçant sur une piste ondulée de la surface active de la dalle tactile parallèle à la direction de déplacement du bouton.

Dans ce cas, la piste ondulée de la surface active de la dalle tactile est rectiligne ou arquée.

Selon une autre caractéristique de l'invention, les ondulations de la surface active de la dalle tactile sont constituées par une suite de crans et de creux à section transversale rectangulaire.

Selon encore une autre caractéristique, le dispositif comprend au moins un bouton rotatif et au moins un bouton mobile en translation, ces boutons étant groupés sur un même module de manière à être déplaçables respectivement sur deux pistes indépendantes ondulées de la surface active de la dalle tactile.

Dans ce cas, le module est fixé au plafonnier du véhicule et le bouton rotatif permet de commander l'ouverture et la fermeture du toit ouvrant du véhicule, tandis que le bouton déplaçable en translation permet de sélectionner le mode d'éclairage du plafonnier actif ou inactif ou synchronisé avec l'ouverture des portes du véhicule.

Plus particulièrement, la dalle tactile comporte des touches transparentes en dehors du module et permettant de commander l'éclairage diffus de l'habitacle du véhicule et au moins un spot lumineux d'éclairage localisé de cet habitacle, au travers de ces touches.

Selon une autre caractéristique, les boutons sont amoviblement fixés à la dalle tactile.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective du dispositif selon l'invention comportant un bouton rotatif de sélection suivant un premier mode de réalisation et associé à une dalle tactile;
- la figure 2 est une vue en coupe suivant la ligne arquée II-II de la figure 1;
- la figure 3 est une vue en coupe d'un bouton de sélection, mobile en translation selon un deuxième mode de réalisation de l'invention, associé à une dalle tactile;
- la figure 4 est une vue en coupe d'un bouton de sélection, mobile en translation selon un troisième mode de réalisation de l'invention, associé à une dalle tactile ; et
- la figure 5 est une vue en perspective d'un module regroupant deux boutons des figures 1 et 3.

Le dispositif 1 de contrôle et/ou de commande d'éléments d'équipements 2 de l'invention est destiné à équiper un véhicule automobile, par exemple au niveau de sa planche de bord, au niveau du plafonnier 3, comme représenté en figure 5, ou tout autre emplacement de son habitacle, en étant accessible au conducteur et/ou aux passagers du véhicule désirant contrôler et/ou commander des éléments d'équipement 2 du véhicule. À titre d'exemple, l'un des éléments d'équipement peut être constitué par un autoradio dont on veut contrôler le volume, ou par un toit ouvrant dont on veut commander l'ouverture et la fermeture.

À cet effet, le dispositif 1 comprend une dalle tactile 4 comprenant une surface active 5, un ou plusieurs capteurs 6, tels que des accéléromètres, en liaison avec une unité de traitement électronique 7 reliée aux éléments d'équipement 2 par une liaison multiplexée 8. De la sorte, l'unité électronique de traitement 7 permet avec le ou les capteurs 6 de détecter et de localiser une onde de choc acoustique 9 engendrée par un impact sur une zone déterminée de la surface active 5 de la dalle tactile 4 pour contrôler et/ou commander l'élément d'équipement 2 associé à cette zone.

Le dispositif 1 comprend en outre au moins un bouton de contrôle et/ou de commande 10 pourvu d'un doigt d'indexation 11 et manuellement mobile, par exemple à l'aide du doigt 12 d'un utilisateur, sur la surface active 5 de la dalle tactile 4 pourvue d'une piste ondulée 13 sur le chemin de déplacement du doigt d'indexation 11 de manière que le doigt 11 du bouton 10 engendre, comme on le verra ultérieurement, une onde de choc acoustique 9 à chaque passage du doigt 11 d'une bosse 14 à un creux 15 de la piste ondulée 13 de la surface active 5.

Chaque bouton 10 peut ainsi être manuellement déplacé sur la piste ondulée 13 de la surface active 5 de la dalle tactile 4, de manière que son doigt d'indexation 11 longe les bosses 14 et les creux 15 de cette piste 13 et jusqu'à être arrêté à un emplacement choisi correspondant à une commande ou un contrôle d'un élément 2 associé au bouton 10.

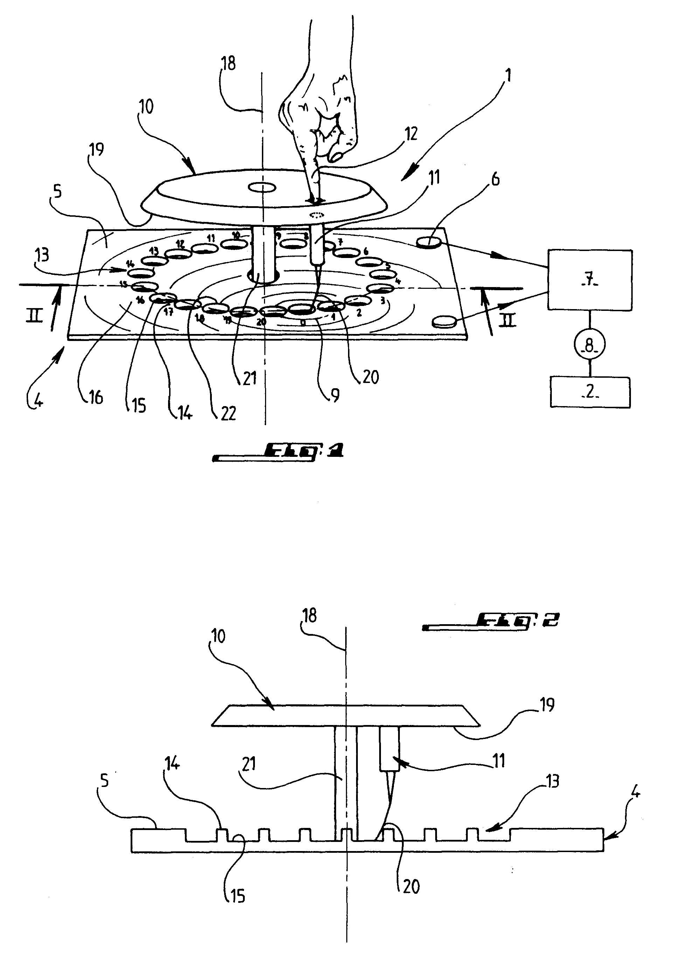

Des inscriptions 16 sont avantageusement prévues au niveau de la piste ondulée 13 de la surface active 5 et sont visibles par l'utilisateur pour lui donner une indication relative au niveau de puissance de l'autoradio et/ou au degré d'ouverture du toit ouvrant correspondant à chaque position du bouton 10 entre deux bosses consécutives, comme visible sur la figure 1.

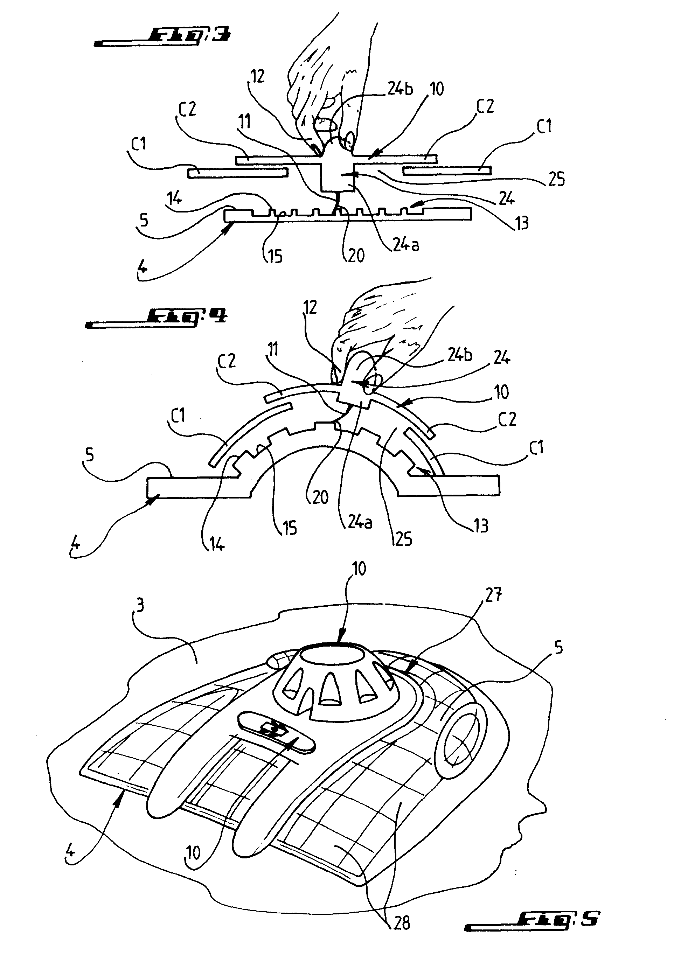

Selon le premier mode de réalisation représenté aux figures 1 et 2, le bouton 10 est constitué par une molette montée rotative relativement à la dalle tactile 4, autour d'un axe de rotation 18 perpendiculaire à la surface active 5 de cette dalle 4 et le doigt d'indexation 11 est excentré relativement à l'axe de rotation 18 de la molette 10. Cette dernière a sa face inférieure circulaire 19 parallèle à la surface active 5 de la dalle tactile 4 et le doigt 11 fait saillie perpendiculairement de cette face 19 vers la surface active 5 de la dalle tactile 4.

L'extrémité du doigt d'indexation 11 comprend une partie en forme de lame flexible 20, métallique ou non, contactant en permanence la surface active 5 de la dalle tactile 4, de manière à suivre les ondulations de la piste ondulée 13 de la surface active 5 pour frapper élastiquement les zones en creux 15 entre deux bosses 14 successives et engendrer à chaque fois une onde de choc acoustique 9. Comme représentée en figure 1, la piste ondulée 13 est circulaire et centrée sur l'axe de rotation 18 de la molette 10, mais il est bien entendu que cette piste 13 peut être en arc de cercle, suivant le nombre de positions de réglage de contrôle et/ou de commande de l'élément d'équipement 2 associé au bouton 10, que l'on souhaite proposer à l'utilisateur.

La molette 10 est fixée à l'extrémité d'un axe cylindrique 21 traversant la dalle 4 et peut être soit solidaire de cet axe 21 pour tourner ensemble relativement à la dalle tactile 4, soit montée libre en rotation à l'extrémité de cet axe 21 qui est alors fixe relativement à la dalle tactile 4. La figure 1 représente en dimensions exagérées le doigt 11 et l'axe 21 ainsi que l'espace entre la molette 10 et la dalle 4, mais il est bien entendu que cet ensemble est en réalité plus compact.

Les figures 1 et 2 montrent également que la succession de bosses 14 et de creux 15 de la piste ondulée 13 présente avantageusement une section rectangulaire, chaque creux 15 étant constitué par une cuvette circulaire 22.

L'utilisateur en faisant tourner à l'aide de son doigt 12 le disque 19 de la molette 10, amène la lame flexible 20 du doigt d'indexation 11 dans l'un des creux 15 choisi de la piste ondulée 13 de la surface active 5 de la dalle tactile 4 pour contrôler et/ou commander l'élément d'équipement 2 associé à la molette.

Selon le deuxième mode de réalisation représenté en figure 3, le bouton 10 est un curseur déplaçable en translation au-dessus de la surface active 5 de la dalle tactile 4 fixe de manière que le doigt d'indexation 11 se déplace sur la piste ondulée 13 rectiligne s'étendant parallèlement à la direction de déplacement du bouton 10.

Le doigt d'indexation 11 est solidaire coaxialement du curseur 10 comportant un corps central 24 généralement cylindrique, maintenu perpendiculairement à la dalle tactile 4. Comme pour le premier mode de réalisation, le doigt d'indexation 11 est pourvu d'une extrémité constituée par une lame flexible 20 en contact permanent avec la surface active 5 de la dalle tactile 4. De même, la piste ondulée 13 peut être constituée par une succession de creux 15 et de bosses 14 présentant une section rectangulaire, chaque creux étant constitué par une cuvette circulaire 22.

Les moyens de guidage en translation du curseur 10 parallèlement à la surface active 5 de la dalle tactile 4 peuvent êtres constitués par tout moyen approprié, tel que par exemple deux coulisses C1 fixées au-dessus de la dalle tactile 4 parallèlement à cette dernière en étant espacées l'une de l'autre pour définir une fenêtre 25 dans laquelle peut se déplacer une partie inférieure 24a du curseur 10, et deux coulisseaux C2 solidaires de chaque côté du bouton 10 engagés respectivement dans les deux coulisses C1.

Le curseur 10 comporte une partie externe 24b pouvant être manuellement saisissable pour permettre à un utilisateur de le déplacer en translation guidée relativement à la surface active 5 de la dalle tactile 4 entre deux positions extrêmes.

Le troisième mode de réalisation représenté en figure 4 ne diffère du deuxième mode de réalisation que par la forme arquée et extérieurement convexe de la piste ondulée 13 au-dessus de laquelle se déplace parallèlement en translation le curseur 10 et son doigt d'indexation 11 à lame flexible 20, les moyens de guidage en translation de ce curseur 10 pouvant être identiques à ceux cités à titre d'exemple pour la figure 3, à part que les coulisses C1 et coulisseaux C2 présentent des formes arquées, de même centre que la forme arquée de la piste ondulée 13.

La figure 5 représente un module 27 associé à une dalle tactile 4, regroupant à la fois une molette rotative 10 de contrôle et/ou de commande telle que décrite dans le premier mode de réalisation et un curseur 10 déplaçable en translation tel que décrit ci-dessus en liaison avec la figure 3 ou 4. À titre d'exemple, ce module 27 et la dalle tactile associée 4 sont fixés au plafonnier 3 du véhicule, avec la molette 10 pouvant être manoeuvrée par l'utilisateur pour commander l'ouverture ou la fermeture d'un toit ouvrant et/ou d'un velum équipant ce véhicule et le curseur 10 pouvant être déplacé par l'utilisateur pour sélectionner le mode d'éclairage du plafonnier: actif, inactif ou synchronisé avec l'ouverture des portes du véhicule. La figure 5 montre que la surface active 5 de la dalle tactile 4 déborde de part et d'autre du module 27 pour définir un certain nombre de touches tactiles transparentes 28 de façon qu'en appuyant sélectivement sur ces touches 28, on déclenche l'allumage de différentes lampes dont l'éclairage est localisé au travers des surfaces transparentes de ces touches 28, produisant par exemple un éclairage diffus et/ou un éclairage localisé dans l'habitacle du véhicule.

## Revendications

1. Dispositif de contrôle et/ou de commande d'éléments d'équipements d'un véhicule automobile, **caractérisé en ce qu'**il comprend une dalle tactile (4) pourvue d'une surface active (5) dotée d'au moins un capteur (6) relié à une unité électronique de traitement (7) de manière à localiser la provenance d'une onde de choc acoustique (9) à laquelle est soumise la surface active (5) et à commander et/ou contrôler un élément d'équipement (2) du véhicule associé à la zone de la surface active (5) de laquelle provient l'onde acoustique (9) et **en ce qu'**il comprend au moins un bouton (10) de commande et/ou de contrôle pourvu d'un doigt d'indexation (11) manuellement mobile sur la surface active (5) de la dalle tactile (4) ondulée sur le chemin de déplacement du doigt d'indexation (11), de manière que le doigt (11) engendre une onde de choc acoustique (9) à chaque passage du doigt (11) d'une bosse (14) à un creux (15) de la surface ondulée de la dalle tactile (4).

2. Dispositif selon la revendication 1, **caractérisé en ce que** le bouton (10) de contrôle et/ou de commande est monté en rotation relativement à la surface active (5) de la dalle tactile (4) suivant un axe de rotation (18) perpendiculaire à la dalle tactile (4) et le doigt d'indexation (11) est solidaire du bouton (10) de façon excentrée par rapport à l'axe de rotation (18) du bouton (10) et comporte une extrémité flexible (20) se déplaçant sur une piste ondulée (13) de la surface active (5) de la dalle tactile (4) au moins en forme d'arc de cercle et de préférence circulaire.

3. Dispositif selon la revendication 2, **caractérisé en ce que** le bouton (10) de contrôle et/ou commande est en forme de molette dont la face plane inférieure circulaire (19) est sensiblement parallèle à la surface active (5) de la dalle tactile (4) et le doigt d'indexation (11) fait saillie de cette face (19) vers la surface active (5) de manière que son extrémité flexible (20) soit en contact permanent avec la piste ondulée (13) de la surface active (5) de la dalle tactile (4).

4. Dispositif selon la revendication 1, **caractérisé en ce que** le bouton (10) de contrôle et/ou de commande est déplaçable en translation relativement à la surface active (5) de la dalle tactile (4) et le doigt d'indexation (11), solidaire coaxialement du bouton (10), comporte une extrémité flexible (20) se déplaçant sur une piste ondulée (13) de la surface active (5) de la dalle tactile (4) parallèle à la direction de déplacement du bouton (10) .

5. Dispositif selon la revendication 4, **caractérisé en ce que** la piste ondulée (13) de la surface active (5) de la dalle tactile (4) est rectiligne ou arquée.

6. Dispositif selon l'une des revendications précédentes, **caractérisé en ce que** les ondulations de la surface active (5) de la dalle tactile (4) sont constituées par une suite de bosses (14) et de creux (15) à section transversale rectangulaire.

7. Dispositif selon les revendications 2 et 4, **caractérisé en ce qu'**il comprend au moins un bouton rotatif (10) et au moins un bouton mobile en translation (10), ces boutons (10) étant groupés sur un même module (27) de manière à être déplaçables respectivement sur deux pistes indépendantes ondulées (13) de la surface active (5) de la dalle tactile (4).

8. Dispositif selon la revendication 7, **caractérisé en ce que** le module (27) est fixé au plafonnier (3) du véhicule et le bouton rotatif (10) permet de commander l'ouverture et la fermeture du toit ouvrant du véhicule, tandis que le bouton déplaçable en translation (10) permet de sélectionner le mode d'éclairage du plafonnier (3).

9. Dispositif selon la revendication 8, **caractérisé en ce que** la dalle tactile (4) comporte des touches transparentes (28) en dehors du module (27) et permettant de commander l'éclairage diffus de l'habitacle du véhicule et au moins un spot lumineux d'éclairage localisé de cet habitacle, au travers de ces touches (28) .

10. Dispositif selon l'une des revendications précédentes, **caractérisé en ce que** les boutons (10) sont amoviblement fixés à la dalle tactile (4).
